Europäisches Patentamt

European Patent Office

Office européen des brevets

(11) Veröffentlichungsnummer: **0 199 267**
**B1**

(12) # EUROPÄISCHE PATENTSCHRIFT

(45) Veröffentlichungstag der Patentschrift:
28.03.90

(51) Int. Cl.⁴: **G02B 6/38**

(21) Anmeldenummer: **86105206.6**

(22) Anmeldetag: **15.04.86**

(54) Lichtwellenleitersteckverbinder.

(30) Priorität: **18.04.85 DE 3514075**

(43) Veröffentlichungstag der Anmeldung:
**29.10.86 Patentblatt 86/44**

(45) Bekanntmachung des Hinweises auf die Patenterteilung:
**28.03.90 Patentblatt 90/13**

(84) Benannte Vertragsstaaten:
**AT BE CH DE FR GB IT LI LU NL SE**

(56) Entgegenhaltungen:
**DE-A- 2 835 582**
**DE-B- 1 075 699**
**FR-A- 2 485 754**
**US-A- 4 336 977**

**PATENTS ABSTRACTS OF JAPAN, Band 8,**
**Nr. 65 (P-263)[1502], 27. März 1984; & JP - A**
**- 58 211 725 (NIPPON DENSHIN DENWA**
**KOSHA) 09.12.1983**

(73) Patentinhaber: **Siemens Aktiengesellschaft,**
**Wittelsbacherplatz 2, D-8000 München 2(DE)**

(72) Erfinder: **Löffler, Herbert, Kirtaweg 38,**
**D-8000 München 82(DE)**
Erfinder: **Preiner, Peter, Noestrasse 20,**
**D-8000 München 71(DE)**

## Beschreibung

Die Erfindung bezieht sich auf einen Lichtwellenleitersteckverbinder entsprechend dem Oberbegriff des Anspruches 1.

Ein solcher Lichtwellenleitersteckverbinder ist schon aus der US-A 4 336 977 bekannt. Die ineinander verzahnten Rillen von Ansatz und Hülse klemmen den Endabschnitt einer Zugentlastungsfaserschicht des Lichtwellenleiterkabels zwischen sich ein und verankern dadurch diese Faserschicht betriebssicher am Steckverbinder, so daß auf das Kabel einwirkende Zugspannungen abgefangen werden und sich nicht in schädlicher Weise auf die Lichtwellenleiter des Lichtwellenleiterkabels auswirken können. Bei dem bekannten Steckverbinder wird die auf den mit der Faserschicht bedeckten hohlzylindrischen Ansatz aufschiebbare Klemmhülse erst nach dem Aufschieben der Klemmhülse auf den Ansatz mit der Rillenstruktur versehen. Hierzu wird eine Crimpzange benötigt, die den Rillen des Ansatzes gegenüberliegende Hülsenbereiche in die Ansatzrillen hineindrückt.

Aufgabe vorliegender Erfindung ist es demgegenüber einen Lichtwellenleitersteckverbinder der eingangs genannten Art so auszubilden, daß die Verzahnung von Ansatz und Hülse ohne die Verwendung einer Crimpzange vorgenommen werden kann.

Erfindungsgemäß ergibt sich die Lösung dieser Aufgabe aus den kennzeichnenden Merkmalen des Anspruches 1.

In Aufschieberichtung der Klemmhülse weniger steil geneigte Begrenzungswände der Rillen beider Teile begünstigen dabei das Aufschieben der Klemmhülse auf den Ansatz. Entgegengesetzt zur Aufschieberichtung der Klemmhülse verhindern jedoch steilere Begrenzungswände der Rillen beider Teile, daß die Klemmhülse wieder vom Ansatz abgezogen werden kann. Die Klemmhülse hält sich daher vorteilhaft infolge ihrer Elastizität und der Form der Rillen selbsttätig am Ansatz fest und klemmt dabei die Faserschicht betriebssicher ein.

In weiterer Ausgestaltung der Erfindung kann vorgesehen sein, daß lediglich ein vom kabelanschlußseitigen Ende des Ansatzes abgewandter Bereich des Ansatzes mit den Rillen versehen ist, daß der Ansatz am kabelanschlußseitigen Ende einen keilförmig ausgebildeten Bereich aufweist und daß zwischen dem keilförmig ausgebildeten Bereich und dem Rillenbereich des Ansatzes eine zumindest gegenüber dem keilförmig ausgebildeten Bereich stufenartig abgesetzte umlaufende Vertiefung an der Außenseite des Ansatzes vorgesehen ist.

Auf diese Weise wird für einen Endabschnitt des Mantels des Lichtwellenleiterkabels zwischen Klemmhülse und Ansatz ein Aufnahmeraum geschaffen, in den sich das Mantelende einschmiegen kann, ohne daß dadurch das Aufschieben der Klemmhülse auf den Ansatz behindert wird.

Bei dem Lichtwellenleitersteckverbinder nach der Erfindung kann weiter vorteilhaft vorgesehen sein, daß die Klemmhülse im Bereich der Vertiefung an ihrer Innenseite mit einer umlaufenden Kante versehen ist und im Bereich der Kante eine geringeren Innendurchmesser aufweist als im Rillenbereich.

Hierdurch wird im Bereich der Vertiefung des Ansatzes eine Klemmstelle für den Kabelmantel gebildet, so daß von der Kabelanschlußseite des Lichtwellenleitersteckverbinders her keine Fremdkörper in das Innere des Steckverbinders eindringen können.

Vorteilhaft ist es auch, wenn die Klemmhülse über die Länge ihres Rillenbereiches mit einem konstanten Innendurchmesser versehen ist.

In weiterer Ausgestaltung der Erfindung kann noch vorgesehen sein, daß weniger steile Begrenzungswände der Rillen einen Winkel von ca. 30° und demgegenüber steilere Begrenzungswände einen Winkel von ca. 60° mit der Steckverbinderachse einschließen, und daß die Rillentiefe etwa 0,3 mm beträgt.

Ein Ausführungsbeispiel der Erfindung wird nachfolgend anhand einer Fig. noch näher erläutert.

Die Fig. zeigt in Seitenansicht, halbseitig geschnitten dargestellt und stark vergrößert einen Lichtwellenleitersteckverbinder, der im wesentlichen auf einer hohlzylindrischen Hülse 1 aufbaut. Die Hülse 1 geht auf der Steckseite des Steckverbinders in einen Steckerstift 2 über, an dessen Stirnseite der Lichtwellenleiter 3 in der Achse des Steckverbinders fixiert mit seiner Stirnseite ein Lichtaus- oder Lichteintrittsfenster bildet, über das z.B. von dem Lichtwellenleiter 3 transportierte Lichtsignale in einen weiteren Lichtwellenleiter übertreten können. Eine außen an der Hülse 1 drehbar befestigte Überwurfmutter 4 ermöglicht es, den Steckverbinder an einem Gegensteckverbinder, der z.B. auch eine Gerätebuchse sein kann, festzulegen.

Auf der Kabelanschlußseite des Steckverbinders ist die Hülse 1 mit einem die Hülse 1 fortsetzenden hohlzylindrischen Ansatz 5 versehen.

In einem vom kabelseitigen Ende 6 des Ansatzes 5 abgewandten Bereich ist der Ansatz 5 außen mit Rillen 7 versehen, die hauptsächlich quer zur Achse 9 des Steckverbinders gerichtet sind, im Querschnitt ein keilförmiges Profil haben und unterschiedlich steile Begrenzungswände aufweisen. Die zur Kabelseite blickenden Begrenzungswände 8 der Rillen 7 des Ansatzes 5 schließen z.B. einen Winkel von ca. 30 Grad mit der Achse 9 des Steckverbinders ein. Demgegenüber bilden die Begrenzungswände 10 der Rillen 7 des Ansatzes 5, die vom kabelseitigen Ende des Steckverbinders abgewandt sind, einen Winkel von ca. 60 Grad mit der Achse 9 des Steckverbinders.

Auf den Ansatz 5, insbesondere den mit den Rillen 7 versehenen Bereich des Ansatzes 5, ist eine aus elastisch dehnbarem Kunststoff bestehende Klemmhülse 11 aufschiebbar ausgebildet. Auf ihrer Innenseite weist die Klemmhülse 11 ebenfalls einen mit Rillen 12 versehenen Bereich auf, der auf den Rillenbereich des Ansatzes aufschiebbar ist. Im entspannten Zustand hat die Klemmhülse 11 im Rillenbereich einen konstanten Innendurchmesser, der kleiner ist, als der Außendurchmesser des Ansatzes 5 zwischen den Rillen 7 des Ansatzes. Die Rillenstruktur der Klemmhülse 11 ist auf die Rillen 7 des Ansatzes 5 abgestimmt. Deshalb sind bei der Klemmhülse 11 diejenigen Begrenzungswände 13, die zum kabelseitigen Ende des Steckverbinders blicken, steiler geneigt und bilden mit der Achse 9 des Steckverbinders einen Winkel von ca. 60 Grad, als die Begrenzungswände 14 der Klemmhülsenrillen, die einen Winkel von ca. 30 Grad mit der Achse 9 des Steckverbinders einschließen.

Beim Aufschieben der Klemmhülse 11 auf den Rillenbereich des Ansatzes 5 erleichtern die weniger steilen Begrenzungswände 8, 14 der Rillen 7, 12 von Ansatz und Klemmhülse das Aufschieben der Klemmhülse auf den Ansatz.

Vor dem Aufschieben der Klemmhülse auf den gerillten Bereich des Ansatzes 5 wird dieser gerillte Bereich mit einem Endabschnitt einer unmittelbar unter einem Mantel 15 sich befindenden Kevlar-Faserschicht belegt, der vom Mantel 15 des Lichtwellenleiterkabels 16 unbedeckt ist. Diese Kevlar-Faserschicht 17 ist dazu vorgesehen, um auf das Lichtwellenleiterkabel 16 einwirkende Zugspannungen aufzufangen. Die gleichmäßig auf den Umfang des Ansatzes 5 verteilte Faserschicht wird durch das Aufschieben der Klemmhülse 11 auf den Ansatz 5 zwischen Hülse und Ansatz eingeklemmt. Durch die Verzahnung der Klemmhülse 11 mit dem Ansatz 5 in dem Bereich, in dem die Rillen 7, 12 von Ansatz und Klemmhülse ineinandergreifen, wird der Faserschicht 17 ein zickzackförmiger Verlauf aufgezwungen, der, zusammen mit dem Klemmeffekt zwischen Hülse und Ansatz, die Faserschicht 17 betriebssicher am Steckverbinder verankert und dadurch das Lichtwellenleiterkabel 16 am Steckverbinder festhält.

Die Faserschicht 17 hat etwa eine Stärke von 0,1 mm, so daß bei einer Rillentiefe von ca. 0,3 mm noch eine ausreichende Verzahnung von Hülse und Ansatz gewährleistet ist. Die mit dem Ansatz verzahnte Hülse 11 läßt sich nicht mehr zerstörungsfrei von Ansatz 5 abziehen.

Zwischen dem Rillenbereich und dem keilförmig ausgebildeten Bereich 18 weist der Ansatz 5 in einem mittleren Bereich außen eine umlaufende Vertiefung 19 auf. In diese Vertiefung ragt eine Kante 20 der Klemmhülse 11, wenn die Klemmhülse auf den Ansatz aufgeschoben ist, so daß der bis in den Bereich der Vertiefung 19 reichende Mantel des Lichtwellenleiterkabels 16 bei geeigneter Bemessung des Abstandes zwischen Klemmhülse 11 und Ansatz 5 im Bereich der Kante 20 zwischen der Kante 20 und dem Boden der Vertiefung 19 eingeklemmt wird. Auf diese Weise wird eine ausreichende Abdichtung zwischen dem Steckverbinder und dem Mantel des Lichtwellenleiterkabels 16 erhalten.

Den Lichtwellenleiter 3 umgeben elastische Stäbe 21, die sich zusammen mit dem Lichtwellenleiter 3 im Bereich des Ansatzes 5 innerhalb der den Ansatz konzentrisch zur Achse 9 des Steckverbinders durchsetzenden Bohrung befinden.

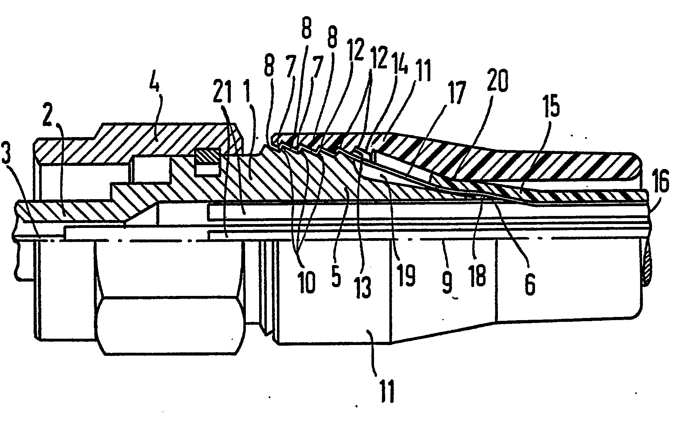

## Patentansprüche

1. Lichtwellenleitersteckverbinder mit einem an seinem kabelseitigen Ende vorgesehenen hohlzylindrischen Ansatz (5) und mit einer mit dem Ansatz (5) verzahnbaren Klemmhülse (11), bei dem Ansatz (5) und Klemmhülse (11) zumindest in einem Teilbereich ihrer sich überlappenden Flächen mit hauptsächlich quer zur Steckverbinderachse gerichteten Rillen (7, 12) versehen sind und bei dem ein Endabschnitt einer unter dem Mantel (15) eines Lichtwellenleiterkabels (16) liegenden Faserschicht (17) über den Rillenbereich des Ansatzes (5) gelegt und anschließend die zuvor auf das Lichtwellenleiterkabel (16) aufgeschobene Klemmhülse (11) mit ihrem Rillenbereich mit dem von der Faserschicht (17) bedeckten Rillenbereich verzahnt wird, dadurch gekennzeichnet, daß die auf ihrer Innenseite bereichsweise mit den Rillen (12) versehene Klemmhülse (11) zumindest in diesem Bereich so elastisch aufweitbar ausgebildet und mit den Begrenzungswänden (13, 14) ihrer Rillen (12) auf die Begrenzungswände (8, 10) der Ansatzrillen (7) derart abgestimmt ist, daß sich die Klemmhülse (11) auf den Ansatz (5) aufschieben läßt und daß sich dabei die Rillen der Klemmhülse (11) mit den Rillen (7) des Ansatzes (5) verzahnen.

2. Lichtwellenleitersteckverbinder nach Anspruch 1, dadurch gekennzeichnet, daß lediglich ein vom kabelanschlußseitigen Ende (6) des Ansatzes (5) abgewandter Bereich des Ansatzes mit den Rillen (7) versehen ist, daß der Ansatz (5) am kabelanschlußseitigen Ende (6) einen keilförmig ausgebildeten Bereich (18) aufweist und daß zwischen dem keilförmig ausgebildeten Bereich (18) und dem Rillenbereich des Ansatzes (5) eine zumindest gegenüber dem keilförmig ausgebildeten Bereich (18) stufenartig abgesetzte umlaufende Vertiefung (19) an der Außenseite des Ansatzes (5) vorgesehen ist.

3. Lichtwellenleitersteckverbinder nach Anspruch 2, dadurch gekennzeichnet, daß die Klemmhülse im Bereich der Vertiefung an ihrer Innenseite mit einer umlaufenden Kante versehen ist und im Bereich der Kante einen geringeren Innendurchmesser aufweist als im Rillenbereich.

4. Lichtwellenleitersteckverbinder nach einem der vorhergehenden Ansprüche, dadurch gekennzeichnet, daß die Klemmhülse über die Länge ihres Rillenbereiches mit einem konstanten Innendurchmesser versehen ist.

5. Lichtwellenleitersteckverbinder nach Anspruch 4, dadurch gekennzeichnet, daß weniger steile Begrenzungswände der Rillen einen Winkel von ca. 30 Grad und demgegenüber steilere Begrenzungswände einen Winkel von ca. 60 Grad mit der Steckverbinderachse einschließen.

6. Lichtwellenleitersteckverbinder nach Anspruch 5, dadurch gekennzeichnet, daß die Rillentiefe etwa 0,3 mm beträgt.

## Claims

1. Light guide ferrule connector having a hollow-cylindrical extension (5) provided at its cable end, and having a clamping sleeve (11) which can be interlocked with the extension (5), in which extension (5) and clamping sleeve (11) are provided, at least in a part region of their mutually overlapping areas, with grooves (7, 12) oriented mainly transversely with respect to the connector axis, and in which an end section of a fibre layer (17) located underneath the jacket (15) of a light guide cable (16) is placed over the groove region of the extension (5) and subsequently the clamping sleeve (11), which has previously been pushed on to the light guide cable (16) is interlocked with its groove region with the groove region covered by the fibre layer (17), characterized in that the clamping sleeve (11), a region of which is provided with the grooves (12) on its inside, is constructed to be elastically expandable at least in this region and the boundary walls (13, 14) of its grooves (12) are matched to the boundary walls (8, 10) of the extension grooves (7) in such a manner that the clamping sleeve (11) can be pushed on to the extension (5) and that during this process the grooves of the clamping sleeve (11) interlock with the grooves (7) of the extension (5).

2. Light guide ferrule connector according to Claim 1, characterized in that only a region of the extension which faces away from the cable connection end (6) of the extension (5) is provided with the grooves (7), that the extension (5) exhibits at the cable connection end (6) a wedge-shaped region (18) and that between the wedge-shaped region (18) and the groove region of the extension (5) a circumferential depression (19), which is set apart in the manner of a step at least with respect to the wedge-shaped region (18) is provided on the outside of the extension (5).

3. Light guide ferrule connector according to Claim 2, characterized in that the clamping sleeve is provided with a circumferential edge on its inside in the region of the depression, and in the region of the edge exhibits a smaller inside diameter than in the groove region.

4. Light guide ferrule connector according to one of the preceding claims, characterized in that the clamping sleeve is provided with a constant inside diameter over the length of its groove region.

5. Light guide ferrule connector according to Claim 4, characterized in that less steep boundary walls of the grooves enclose an angle of approximately 30° and comparatively steeper boundary walls enclose an angle of approximately 60° with the connector axis.

6. Light guide ferrule connector according to Claim 5, characterized in that the groove depth is approximately 0.3 mm.

**Revendications**

1. Connecteur pour guide d'ondes optiques comportant un embout cylindrique creux (5) prévu sur l'extrémité située du côté du câble, et une douille de serrage (11) pouvant engrener avec l'embout (5) et dans lequel l'embout (5) de la douille de serrage (11) comportent, au moins sur une partie de leurs surfaces en recouvrement, des rainures (7, 12) dirigées principalement transversalement par rapport à l'axe du connecteur, et dans lequel une section d'extrémité d'une couche de fibres (17) située au-dessous de l'enveloppe (15) d'un câble (16) à guide d'ondes optiques est appliquée au-dessus de la zone de l'embout rainuré (5), puis, la douille de serrage (11), emmanchée préablement sur le câble (7) à guide d'ondes otiques, vient engrener, au moyen de sa zone rainurée, avec la zone rainurée recouverte par la couche de fibres (17), caractérisé par le fait que la douille de serrage (11), qui comporte les rainures (12), par endroits sur sa face intérieure, est agencée de manière à pouvoir être élargie élastiquement au moins dans cette zone et les parois limites (13, 14) de ces rainures (12) sont accordées avec les parois limites (8, 10) des rainures (7) de l'embout de telle sorte que la douille de serrage (11) peut être emmanchée sur l'embout (5) et que les rainures de la douille de serrage (11) engrènent avec les rainures (7) de l'embout (5).

2. Connecteur pour guide d'ondes optiques suivant la revendication 1, caractérisé par le fait que seule une zone de l'embout (5), qui est tournée à l'opposé de l'extrémité de cet embout située du côté du raccordement du câble, comporte les rainures (7), que l'embout (5) comporte, sur son extrémité (6) située du côté du raccordement du câble, une zone en forme de coin (18) et qu'entre la zone en forme de coin (18) et la zone rainurée de l'embout (5) il est prévu, sur la face extérieure de l'embout (5), un renfoncement périphérique (19), qui est agencé à la manière d'une partie étagée au moins par rapport à la zone en forme de coin (18).

3. Connecteur pour guide d'ondes optiques suivant la revendication 2, caractérisé par le fait que la douille de serrage comporte au serrage comporte au voisinage du renfoncement sur sa face intérieure, un bord circonférentiel et possède, au voisinage de ce bord, un diamètre intérieur à celui présent dans la zone rainurée.

4. Connecteur pour guide d'ondes optiques suivant l'une des revendications précédentes, caractérisé par le fait que la douille de serrage possède un diamètre intérieur constant sur toute la longueur de sa zone rainurée.

5. Connecteur pour guide d'ondes optiques suivant la revendication 4, caractérisé par le fait que des parois limites moins pentues des rainures font un angle d'environ 30 degrés et que des parois limites nettement plus pentues que les précédentes font un angle d'environ 60 degrés par rapport à l'axe du connecteur.

6. Connecteur pour guide d'ondes optiques suivant la revendication 5, caractérisé par le fait que la profondeur des rainures est égale à environ 0,3 mm.